# DEMANDE DE BREVET EUROPEEN

(11) **EP 1 870 180 A1**
(43) Date de publication de la demande: **26.12.2007**
(21) Numéro de dépôt: 07290714.0
(22) Date de dépôt: 08.06.2007
(51) Int. Cl.: B21D 53/88, F16D 3/38

(54) **Procédé d'obtention d'un alésage de précision dans une aile de fourche de cardan, procédé correspondant de fabrication d'une fourche de cardan, et fourche de cardan ainsi obtenue**

(30) Priorité: 20.06.2006 FR 0605500
(71) Demandeur: Fuji Autotech France SAS, 25350 Mandeure (FR)
(72) Inventeur: Lidoine, Eric, 25700 Mathay (FR)
(74) Mandataire: Blot, Philippe Robert Emile

(57) **Abrégé**

Dans ce procédé d'obtention d'un alésage de précision, on réalise une ébauche d'alésage au moyen d'au moins une opération de poinçonnage.

Au cours de ladite opération de poinçonnage (23), on forme une ébauche d'alésage cannelée (11 C). Le procédé comprend en outre une étape (25) de brunissage après ladite étape de réalisation d'ébauche (22, 23), ladite étape de brunissage permettant de calibrer l'alésage (11) à la dimension et à la précision voulues.

L'invention concerne également un procédé correspondant de fabrication d'une fourche de cardan, et une fourche de cardan obtenue par un tel procédé.

Application à un cardan de colonne de direction de véhicule automobile.

## Description

La présente invention concerne un procédé d'obtention d'un alésage de précision dans une aile de fourche de cardan, l'alésage étant destiné à loger un palier de guidage d'un croisillon de cardan, comprenant une étape de réalisation d'une ébauche d'alésage, qui comprend au moins une opération de poinçonnage.

On connaît de tels procédés dans l'état de la technique, dans lesquels le calibrage définitif de l'alésage, à la dimension et à la précision voulues, sont obtenus

par une opération d'usinage.

Alors que l'essentiel des étapes de fabrication de la fourche de cardan peuvent être effectuées à grande cadence, dans un outil à suivre, dans lequel on fait défiler une bande de métal, l'opération d'usinage doit être effectuée en sortie de l'outil à suivre, ce qui augmente très sensiblement le temps de fabrication de la fourche.

L'invention a pour but de remédier à cet inconvénient, et de réduire drastiquement les coûts et la durée d'opération liés à la mise en oeuvre d'un processus spécifique pour calibrer les alésages des fourches de cardan.

A cet effet, l'invention a pour objet un procédé du type ci-dessus, caractérisé en ce qu'au cours de ladite opération de poinçonnage, on forme une ébauche d'alésage cannelée, et en ce qu'il comprend une étape de brunissage après ladite étape de réalisation d'ébauche, ladite étape de brunissage permettant de calibrer l'alésage à la dimension et à la précision voulues.

Grâce à la formation d'une ébauche cannelée, on rend possible le brunissage des alésages dans l'outil à suivre selon la même cadence que les opérations de poinçonnage des postes précédents. Cela est rendu possible, malgré l'épaisseur importante de la bande métallique utilisée, la matière en excès pouvant fluer dans les cannelures lors du brunissage.

De préférence, l'étape de réalisation d'ébauche comprend deux opérations de poinçonnage successives, à savoir une première opération de poinçonnage au cours de laquelle on forme un alésage de dimension inférieure à la dimension voulue pour l'alésage calibré, et la deuxième opération de poinçonnage au cours de laquelle on forme l'ébauche d'alésage cannelée.

L'invention concerne en outre un procédé de fabrication d'une fourche de cardan à partir d'une bande métallique, dans un outil à suivre, ladite fourche comportant deux ailes sensiblement parallèles dotées chacune d'un alésage coaxial destiné à loger un palier de guidage d'un croisillon de cardan, ledit procédé de fabrication comprenant les étapes successives consistant à :
- exécuter une étape de détourage afin d'obtenir une première pièce intermédiaire sensiblement plane dont les formes extérieures correspondent sensiblement aux formes extérieures du développé de la fourche ; et
- exécuter le procédé tel que défini ci-dessus, pour former les deux ébauches d'alésage et calibrer les deux alésages des ailes respectives.

Selon des caractéristiques avantageuses du procédé de fabrication selon l'invention :
- entre l'étape de réalisation d'ébauche et l'étape de brunissage, on exécute une étape de pliage au cours de laquelle les deux ailes sont rabattues, à partir du plan de la première pièce intermédiaire, de sorte à être rendues sensiblement parallèles, avec leurs alésages coaxiaux ;
- l'étape de réalisation d'ébauche d'alésage est exécutée parallèlement, et de façon simultanée, pour les alésages respectifs des deux ailes de la fourche ;
- l'étape de brunissage est exécutée de façon simultanée pour les alésages des deux ailes de fourche de cardan.

L'invention vise en outre un outil à suivre pour la mise en oeuvre d'un procédé tel que défini ci-dessus, comportant successivement, dans le sens de défilement de la bande métallique :
- un poste de poinçonnage comportant au moins un poinçon cannelé pour former l'ébauche d'alésage cannelée dans chacune des ailes de fourche, et
- un poste de brunissage comportant au moins un brunissoir pour calibrer l'alésage dans chacune des ailes de la fourche.

Selon des caractéristiques avantageuses de l'outil à suivre selon l'invention :
- l'outil à suivre comporte, en amont du poste de poinçonnage à poinçon cannelé, un poste de poinçonnage comprenant au moins un poinçon cylindrique lisse pour former une ébauche d'alésage lisse dans chacune des ailes de fourche ;
- l'outil à suivre comprend un poste de pliage, entre le poste de poinçonnage à poinçon cannelé et le poste de brunissage, pour rabattre les deux ailes à partir du plan de la première pièce intermédiaire, de sorte à rendre lesdites ailes sensiblement parallèles, avec leurs alésages coaxiaux ; et
- les poinçons du ou des postes de poinçonnage sont mobiles orthogonalement au plan de défilement de la bande, tandis que le brunissoir est mobile parallèlement à ce plan et orthogonalement à la direction de défilement.

L'invention vise enfin une fourche de cardan, notamment de colonne de direction de véhicule automobile, comprenant deux ailes sensiblement parallèles, dotées chacune d'un alésage coaxial destiné à loger un palier de guidage d'un croisillon de cardan, caractérisée en ce que ledit alésage présente des cannelures réparties sur sa périphérie.

Un mode particulier de réalisation de l'invention va maintenant être décrit plus en détail, en référence aux dessins annexés, sur lesquels :
- la Figure 1 est une vue schématique en perspective d'une liaison à cardan comportant des fourches du type pouvant être obtenu par un procédé selon l'invention ;
- la Figure 2 est une vue en coupe dans un plan axial, à plus grande échelle, d'une fourche de cardan de la Figure 1 ;
- les Figures 3 et 4 sont des vues schématiques, respectivement dans le plan de défilement de la bande métallique et dans un plan orthogonal, illustrant les étapes successives d'un procédé de fabrication selon l'invention, permettant d'obtenir une fourche de cardan du type représenté aux Figures précédentes, à partir d'une bande métallique.

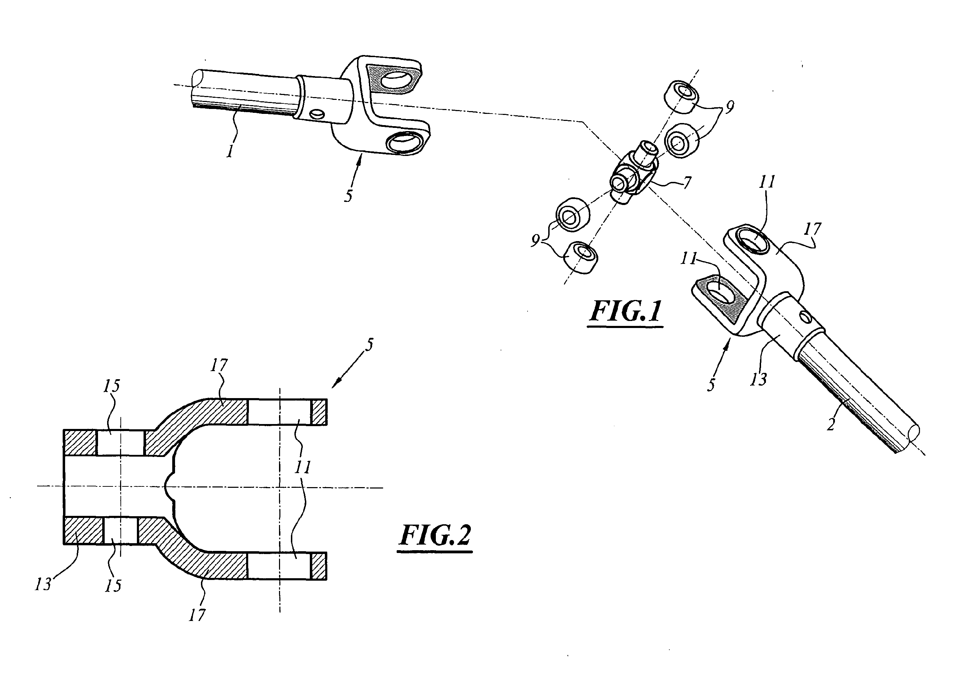

Sur la Figure 1, on a représenté, et de façon schématique, une partie de colonne de direction de véhicule automobile.

La partie de colonne de direction représentée comporte essentiellement un arbre supérieur (ou arbre d'entrée) 1 prévu pour être solidaire d'un volant de direction (non représenté), un arbre inférieur (ou arbre de sortie) 2, prévu pour être relié à un mécanisme d'orientation de roues, et une liaison 3 à cardan, reliant l'arbre supérieur 1 à l'arbre inférieur 2.

De façon classique, la liaison à cardan (ou plus simplement « cardan ») 3 comprend deux fourches 5 de cardan, solidaires chacune de l'un respectif des deux arbres 1, 2.

Le cardan 3 comprend en outre un croisillon 7 à deux branches perpendiculaires, autour desquelles sont articulées à rotation respectivement les deux fourches 5.

A cet effet, le cardan 3 comprend deux paires de palier coaxiaux 9, par exemple des douilles à aiguilles, les deux paliers d'une même paire étant logés dans deux alésages coaxiaux 11 d'une même fourche 5 (voir Figure 2). Chaque branche du croisillon est montée dans les paliers d'une paire respective, de façon à pouvoir tourner autour de son axe, coaxialement aux alésages 11.

Dans l'exemple représenté sur les Figures 1 et 2, une fourche 5 comprend un corps tubulaire 13 prévu pour être emmanché coaxialement à l'extrémité de l'arbre respectif 1, 2 et assurer la solidarisation de la fourche 5 sur l'arbre respectif 1, 2. A cet effet, le corps tubulaire 23 est muni d'alésages transversaux 15, agencés coaxialement, prévus pour recevoir un élément, tel qu'une broche, goupille ou vis, de solidarisation avec l'arbre 1, 2.

La fourche comprend en outre deux ailes 17 essentiellement planes et parallèles, symétriques dans un plan axial, qui font saillie du corps tubulaire 13. Les alésages coaxiaux 11 sont formés dans les ailes 17, ces alésages étant traversants.

Dans l'application considérée, à savoir une articulation d'arbre de direction de véhicule automobile, il est nécessaire de garantir un guidage de précision du croisillon de cardan. Ainsi, les alésages 11 doivent être obtenus avec une grande précision de position et de dimension, en l'occurrence de diamètre.

La difficulté pour obtenir une telle précision avec une cadence élevée de fabrication résulte notamment de l'épaisseur de métal utilisée pour la fabrication de telle fourche de cardan. En effet, de telles fourches de cardan sont généralement réalisées à partir d'une tôle métallique dont l'épaisseur est comprise entre 5 et 7 mm, de préférence égale à environ 6 mm, ce qui est également le cas dans l'exemple de réalisation décrit ici. Il est également possible d'utiliser une tôle de plus faible épaisseur, dont on augmente localement l'épaisseur dans la région des alésages.

Pour minimiser les temps et les coûts de fabrication des fourches de cardan, pour des applications du secteur automobile telles que mentionnées ici, les fourches 5 sont essentiellement réalisées dans un outil à suivre, dans lequel défile la bande métallique. Cette dernière est traitée dans des postes successifs de l'outil, dans lesquels sont réalisées notamment des opérations de pliage et d'estampage à cadence élevée.

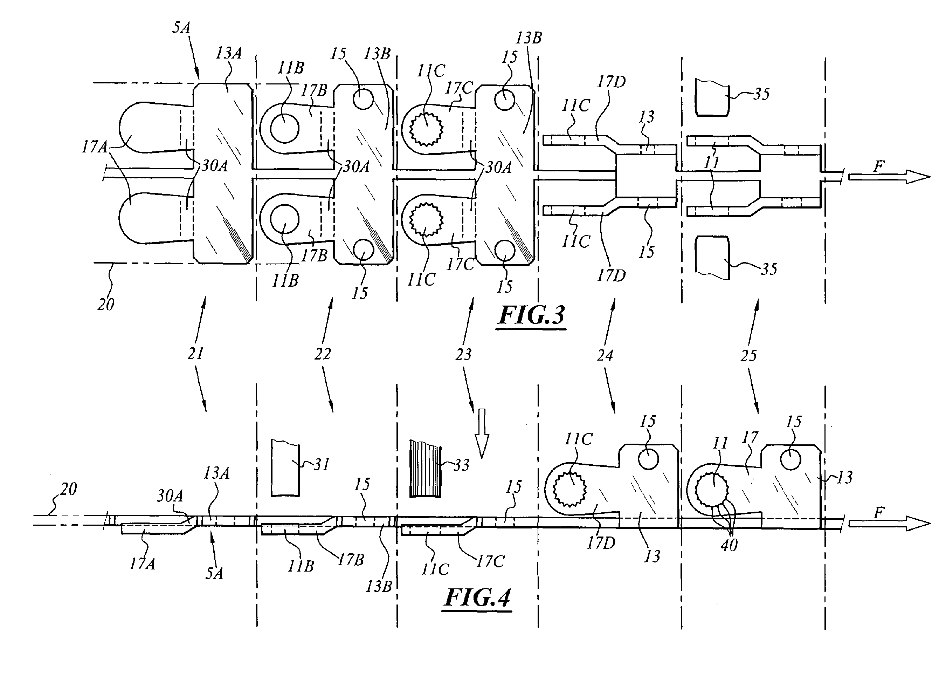

On va décrire à présent plus en détail, en référence aux Figures 3 et 4, un procédé de fabrication d'une fourche de cardan du type décrit précédemment, selon l'invention.

Sur ces Figures, on a illustré le passage d'une bande de métal, dont l'ébauche est schématisée en traits mixtes sous la référence 20, dans un outil à suivre représenté par cinq de ses postes successifs 21, 22, 23, 24, 25. Ces postes correspondent à cinq étapes successives du procédé selon l'invention. Le sens de défilement de la bande est représenté sur ces Figures par la flèche F.

Dans tout ce qui suit, le plan de la bande de métal 20 et la direction de défilement F seront supposés horizontaux.

Dans le premier poste 21 illustré sur les Figures 3 et 4, on exécute une étape de pliage et de détourage, afin d'obtenir une première pièce intermédiaire 5A essentiellement plane, dont les formes extérieures correspondent sensiblement aux formes extérieures du développé de la fourche 5 représentée précédemment. On reconnaît en particulier le développé 13A du corps tubulaire 13, et le développé 17A des deux ailes de fourche 17. Dans l'exemple représenté, la première pièce intermédiaire 5A n'est pas tout à fait plane, un décrochement 30A étant formé entre la partie 13A et les parties 17A.

Cette étape de détourage et de pliage est réalisée par un ou plusieurs outils d'emboutissage non représentés, qui peuvent être de type classique.

Dans les deuxième 22 et troisième 23 postes d'outillage représentés, on exécute une étape de réalisation d'ébauche d'alésage.

Dans le deuxième poste 22, qui comprend deux poinçons verticaux 31 mobiles suivant leur axe, prévus pour frapper respectivement et de façon simultanée les deux ailes 17A, on exécute une opération de poinçonnage pour former une ébauche d'alésage 11 B dans chaque aile 17A. Les pistons 31 sont de forme extérieure cylindrique lisse, de sorte à former une ébauche d'alésage circulaire lisse 11A, de diamètre légèrement inférieur à celui de l'alésage final 11, sur chacune des ailes 17A reposant à plat, au droit des poinçons 31 respectifs.

Ce poste de poinçonnage 22 comprend également une paire de poinçons (non représentés) permettant de former simultanément, dans ce poste, les deux alésages 15 du corps développé 13A.

Après poinçonnage, les ailes sont référencées 17B et le corps développé 13B.

Le troisième poste 23, définissant avec le poste 22 le poste de poinçonnage de l'outil, comprend une paire de poinçons cannelés 33. Chaque poinçon 33 est également mobile suivant son axe vertical, orthogonalement au plan de la bande. Ses cannelures sont formées axialement et réparties sur sa périphérie.

Dans ce poste 23, on forme simultanément dans chaque aile 17B une ébauche d'alésage cannelée 11C à partir de l'ébauche lisse 11 B.

Pour cela, le poinçon cannelé 33 frappe l'aile correspondante 17 en étant déplacé coaxialement à l'alésage initialement lisse 11 B, de sorte à former sur la périphérie de l'alésage des cannelures régulières, dont le fond est situé sur un cercle de diamètre égal ou très légèrement supérieur à celui de l'alésage final 11.

Les cannelures du poinçon 33 sont également conçues de telle façon que les crêtes des cannelures formées dans l'alésage 11C soient réparties sur un cercle de diamètre légèrement inférieur à celui de l'alésage final 11.

Dans le poste suivant 24, on exécute une étape de pliage au cours de laquelle les deux ailes 17D sont rabattues à partir du plan de la première pièce intermédiaire 5A, de sorte à être rendues sensiblement parallèles, avec leurs alésages 11C coaxiaux. Dans cette étape de pliage, le corps 13B est plié (ou roulé) de façon à prendre sa forme tubulaire définitive 13, ou alternativement une forme intermédiaire prévue pour être pliée de nouveau ultérieurement.

Les ailes 17 étant dans leur disposition finale, sensiblement orthogonales au plan de défilement de la bande 20, on exécute dans le poste suivant 25 une opération de brunissage, dans laquelle on calibre simultanément les deux alésages 11 au diamètre et à la précision voulus.

Cette opération de brunissage est exécutée au moyen d'un brunissoir 35 en deux parties coaxiales mobiles selon leur axe commun, orthogonalement à la direction F et parallèlement au plan de la bande.

Les deux parties du brunissoir 35 sont insérées chacune dans une ébauche d'alésage cannelée 11C respective, coaxialement à l'alésage, de sorte à enlever tout ou partie de la matière définissant les cannelures de l'alésage cannelé 11C.

Comme cela est visible sur la Figure 4, l'alésage 11 final peut présenter des cannelures 40 qui sont des cannelures résiduelles résultant de l'enlèvement partiel de matière par le brunissoir 35.

Le diamètre de l'alésage final 11 est défini par les crêtes des cannelures résiduelles 40, sur lesquelles prendra appui la surface extérieure du palier de roulement.

Les étapes ultérieures du procédé de fabrication de fourche de cardan selon l'invention ne seront pas décrites ici, s'agissant d'éventuelles étapes supplémentaires de pliage, qui peuvent être de type classique, ou encore d'étapes de découpage visant à désolidariser les fourches alors disposées en bande.

On notera que les alésages cannelés 11C formés dans le poste d'outillage 23 permettent l'intégration de l'opération de calibrage dans l'outil à suivre, car les cannelures permettent à la matière de fluer lors de la déformation des parties saillantes.

## Revendications

1. Procédé d'obtention d'un alésage de précision dans une aile de fourche de cardan, l'alésage (11) étant destiné à loger un palier (9) de guidage d'un croisillon (7) de cardan, comprenant une étape (22, 23) de réalisation d'une ébauche d'alésage, qui comprend au moins une opération de poinçonnage, **caractérisé en ce qu'**au cours de ladite opération de poinçonnage (23), on forme une ébauche d'alésage cannelée (11C), et **en ce qu'**il comprend une étape (25) de brunissage après ladite étape de réalisation d'ébauche (22, 23), ladite étape de brunissage permettant de calibrer l'alésage (11) à la dimension et à la précision voulues.

2. Procédé suivant la revendication 1, **caractérisé en ce que** l'étape de réalisation d'ébauche comprend deux opérations de poinçonnage (22, 23) successives, à savoir une première opération de poinçonnage (22) au cours de laquelle on forme un alésage (11B) de dimension inférieure à la dimension voulue pour l'alésage calibré (11), et la deuxième opération de poinçonnage (23) au cours de laquelle on forme l'ébauche d'alésage cannelée (11C).

3. Procédé de fabrication d'une fourche de cardan à partir d'une bande métallique, dans un outil à suivre, ladite fourche (5) comportant deux ailes (17) sensiblement parallèles dotées chacune d'un alésage coaxial (11) destiné à loger un palier (9) de guidage d'un croisillon (7) de cardan, ledit procédé de fabrication comprenant les étapes successives consistant à :
- exécuter une étape de détourage (21) afin d'obtenir une première pièce intermédiaire (5A) sensiblement plane dont les formes extérieures correspondent sensiblement aux formes extérieures du développé de la fourche (5) ; et
- exécuter le procédé suivant la revendication 1 ou 2, pour former les deux ébauches d'alésage (11 C) et calibrer les deux alésages (11) des ailes (17) respectives.

4. Procédé de fabrication suivant la revendication 3, **caractérisé en ce qu'**entre l'étape (22, 23) de réalisation d'ébauche et l'étape de brunissage (25), on exécute une étape de pliage (24) au cours de laquelle les deux ailes (17) sont rabattues, à partir du plan de la première pièce intermédiaire (5A), de sorte à être rendues sensiblement parallèles, avec leurs alésages (11 C) coaxiaux.

5. Procédé de fabrication suivant la revendication 3 ou 4, **caractérisé en ce que** l'étape de réalisation d'ébauche d'alésage (22, 23) est exécutée parallèlement, et de façon simultanée, pour les alésages respectifs des deux ailes (17) de la fourche.

6. Procédé de fabrication suivant l'une quelconque des revendications 3 à 5, **caractérisé en ce que** l'étape de brunissage (25) est exécutée de façon simultanée pour les alésages (11) des deux ailes (17) de fourche de cardan.

7. Outil à suivre pour la mise en oeuvre d'un procédé selon l'une quelconque des revendications 3 à 6, comportant successivement, dans le sens (F) de défilement de la bande métallique (20) :
- un poste de poinçonnage (23) comportant au moins un poinçon cannelé (33) pour former l'ébauche d'alésage cannelée (11 C) dans chacune des ailes de fourche (17), et
- un poste de brunissage (25) comportant au moins un brunissoir (35) pour calibrer l'alésage (11) dans chacune des ailes (17) de la fourche.

8. Outil à suivre suivant la revendication 7, **caractérisé en ce qu'**il comporte, en amont du poste de poinçonnage (23) à poinçon cannelé (33), un poste de poinçonnage (22) comprenant au moins un poinçon cylindrique lisse (31) pour former une ébauche d'alésage lisse (11 B) dans chacune des ailes de fourche (17).

9. Outil à suivre suivant la revendication 7 ou 8, **caractérisé en ce qu'**il comprend un poste de pliage (24), entre le poste de poinçonnage (23) à poinçon cannelé et le poste de brunissage (25), pour rabattre les deux ailes (17) à partir du plan de la première pièce intermédiaire (5A), de sorte à rendre lesdites ailes sensiblement parallèles, avec leurs alésages (11 C) coaxiaux.

10. Outil à suivre suivant la revendication 9, **caractérisé en ce que** les poinçons (31, 33) du ou des postes de poinçonnage (22, 23) sont mobiles orthogonalement au plan de défilement de la bande (20), tandis que le brunissoir (35) est mobile parallèlement à ce plan et orthogonalement à la direction (F) de défilement.

11. Fourche de cardan, notamment de colonne de direction de véhicule automobile, comprenant deux ailes (17) sensiblement parallèles, dotées chacune d'un alésage (11) coaxial destiné à loger un palier (9) de guidage d'un croisillon (7) de cardan, **caractérisée en ce que** ledit alésage (11) présente des cannelures (40) réparties sur sa périphérie.
